**Europäisches Patentamt**

**European Patent Office**

**Office européen des brevets**

(19)

(11) Veröffentlichungsnummer: **0 173 174**
**B1**

(12)

# EUROPÄISCHE PATENTSCHRIFT

(45) Veröffentlichungstag der Patentschrift:
**28.12.88**

(21) Anmeldenummer: **85110233.5**

(22) Anmeldetag: **15.08.85**

(51) Int. Cl.⁴: **F 16 L 47/02**

(54) Schweissbares Verbindungselement zum Verbinden oder Anschliessen thermoplastischer Leitungselemente.

(30) Priorität: **28.08.84 CH 4126/84**

(43) Veröffentlichungstag der Anmeldung:
**05.03.86 Patentblatt 86/10**

(45) Bekanntmachung des Hinweises auf die Patenterteilung:
**28.12.88 Patentblatt 88/52**

(84) Benannte Vertragsstaaten:
**AT BE CH DE FR GB IT LI LU NL SE**

(56) Entgegenhaltungen:
**CH-A- 601 719**
**CH-A- 632 078**

(73) Patentinhaber: **VON ROLL AG, CH-4563 Gerlafingen (CH)**

(72) Erfinder: **Künnecke, Walter, Bollwerkstrasse 77, CH-4102 Binningen (CH)**
Erfinder: **Amacher, Urs, Gallishofstrasse 254, CH-3361 Aeschi (CH)**
Erfinder: **Meier, Max, Grossmatt, CH-4571 Lüterkofen (CH)**

(74) Vertreter: **EGLI-EUROPEAN PATENT ATTORNEYS, Horneggstrasse 4, CH-8008 Zürich (CH)**

## Beschreibung

Die Erfindung betrifft ein schweissbares Verbindungselement zum Verbinden oder Anschliessen thermoplastischer Leitungselemente, welches einen thermoplastischen Körper aufweist, in welchem zur Erzeugung von Wärme ein Heizelement zur Verschweissung des Körpers mit dem bzw. den in dem Schweissbereich liegenden Leitungselement bzw. Leitungselementen und eine Anzeigevorrichtung angeordnet sind.

Das Verbinden von Leitungselementen aus einem Thermoplast mit Hilfe eines ebenfalls thermoplastischen mit einem Heizelement versehenen Verbindungselement ist allgemein bekannt. Unter Leitungselementen werden hierbei Rohrleitungsteile, Armaturen und Formstücke verstanden, die durch die Verbindungselemente zu Leitungen und Leitungsnetzen zusammengefügt werden. Die Verbindungselemente sind hierbei häufig als Elektro-Schweissmuffen und als elektrische schweissbare Anschluss- und Anbohrschellen ausgebildet. Die Verbindungselemente können jedoch auch für das Verbinden anderer Elemente als Rohrleitungselemente verwendet werden, z.B. zum Zusammenfügen von Stangenteilen, doch stellt die Verwendung von schweissbaren Verbindungselementen im Rohrleitungsbau eines der häufigsten Anwendungen dar.

Damit die Verbindung von Leitungselementen mittels solchen Verbindungselementen zuverlässig erfolgt, ist eine Kontrolle der Verschweissung erwünscht. Hierbei ist die Qualität der Verschweissung im wesentlichen von der richtigen Temperatur im Schweissbereich und dem beim Schweissvorgang entstehenden Schweissdruck abhängig, d.h. von dem Druck, der auf das durch die zugeführte Wärme plastifizierte Material in der Schweisszone ausgeübt wird. Dieser entsteht dadurch, dass dem Verbindungselement eine Schrumpfreserve erteilt wird, die sich beim Plastifizieren des Schweissbereiches durch die zugeführte Wärme in einem Schrumpfen des Verbindungselementes äussert. Dieses Schrumpfen, verbunden mit der Volumenvergrösserung des Materials beim Erwärmen des Schweissbereiches, bewirkt diese Drucksteigerung in dem Schweissbereich.

Da alle Umstände, die das Erreichen der richtigen Schweisstemperatur und des Schweissdruckes verhindern, eine Qualitätsverminderung der Schweissverbindung darstellen, werden schon seit längerer Zeit die Verbindungselemente mit zusätzlichen Anzeigemitteln versehen, welche Rückschlüsse auf die Qualität der Schweissung geben sollen.

Bei einer bekannten Anzeigevorrichtung wird ein Farbumschlagpunkt verwendet, der auf der äusseren Muffenoberfläche angebracht wird und bei genügender Erwärmung des Körpers des Verbindungselementes seine Farbe wechselt. Damit eine verbesserte Temperaturanzeige erreicht wird, ist es bekannt (CH-A 553 368), den Farbumschlagpunkt an eine Stelle geringerer Wandstärke anzuordnen. Aber auch in diesem Fall kann nur die Temperatur festgestellt werden, nicht aber der Schweissdruck, und zudem besteht die Unsicherheit, dass durch äussere Wärmebeeinflussung ein Farbumschlag erfolgen kann.

Da die Temperaturanzeige am Verbindungselement allein keine zuverlässigen Rückschlüsse auf die Qualität der Schweissung erlaubt, sind auch Lösungen bekanntgeworden, bei denen der in dem Schweissbereich der Schweissung entstehende Druck sichtbar gemacht wird. Hierbei können Schwachstellen im Körper des Verbindungselementes vorgesehen werden, die sich durch den entstehenden Schweissdruck ausbeulen. Weiter ist es bekannt (CH-A 632 078), Ausnehmungen vorzusehen, deren Grund in der Nähe des Schweissbereiches endet. Diese füllen sich beim Schweissen mit mehr oder weniger plastischem Material und zeigen somit an, ob ein ausreichender Schweissdruck mit entsprechender Temperatur im Schweissbereich vorhanden ist. Eine bekannte Verbesserung dieser Qualitätsanzeige für die Schweissung (CH-A 601 719) besteht darin, dass in der Bohrung ein Stift angeordnet ist. Dieser erhebt sich beim Auftreten des Schweissdruckes über die Muffenoberfläche und ist dadurch gut erkennbar. Diese Ausführungsform hat sich vor allem bei relativ dünnwandigen Verbindungselementen bewährt. Der hervortretende Stift stellt ein verhältnismässig genaues Mass für die Temperatur und den Schweissdruck in dem Schweissbereich dar. Bei höheren Schweissdrücken aber, wie sie bei dickwandigeren Verbindungselementen üblich sind, weist diese Ausführungsform den Nachteil auf, dass die Tiefe der Bohrung schwierig festzulegen ist. Ist der Grund der Bohrung zu nahe beim Schweissbereich, erfolgt die Bewegung des Stiftes zu früh, ist jedoch der Grund der Bohrung vom Schweissbereich entfernt angeordnet, tritt keine Bewegung des Stiftes auf, obwohl der Schweissdruck entstanden ist.

Hier setzt die Erfindung ein, der die Aufgabe zugrundeliegt, ein schweissbares Verbindungselement der eingangs beschriebenen Art so auszubilden, dass eine klare Anzeige der Druck- und Temperaturverhältnisse in dem Schweissbereich erreicht wird, aufgrund welcher die Beurteilung möglich ist, ob eine Schweissung gut oder schlecht ausgefallen ist.

Diese Aufgabe wird gemäss der Erfindung dadurch gelöst, dass in dem Körper ein geschlossener zylinderförmiger Hohlraum angeordnet ist, dessen Grund in dem Schweissbereich des Heizelementes liegt und dessen Achse etwa radial verläuft, in welchem Hohlraum als Anzeigemittel ein Kolben mit einem Anzeigestift aus einer schweissbereichnahen Ausgangslage am Grund des Hohlraumes beim Schweissen in eine schweissbereichferne Endlage an einer den Hohlraum abschliessenden Decke bewegbar ist, wobei der Anzeigestift in der Endlage aus einem Durchgang durch die Decke herausragt.

Die Erfindung ist in der Zeichnung in einigen Ausführungsbeispielen dargestellt und nachfolgend beschrieben. Es zeigen:

Fig. 1 einen Längsschnitt der Verbindung zweier Rohrleitungsenden durch eine Elektro-Schweissmuffe,

Fig. 2 eine Seitenansicht teilweise im Schnitt der Verbindung einer Rohrleitung mit einer Anschluss- oder Anbohrschelle,

Fig. 3 einen Teilausschnitt der Verbindung nach Fig. 1 oder 2 mit einer am Schweissbereich der Elektro-Schweissmuffe angeordneten Anzeigevorrichtung,

Fig. 4 die in Fig. 3 dargestellte Anzeigevorrichtung nach erfolgter einwandfreier Schweissung,

Fig. 5 eine Seitenansicht eines Kolbens der Anzeigevorrichtung mit am Kolbenumfang angeordneten reibungserzeugenden Lamellen,

Fig. 6 eine weitere Ausführungsform der Anzeigevorrichtung,

Fig. 7 eine dritte Ausführungsform der Anzeigevorrichtung,

Fig. 8 eine vierte Ausführungsform der Anzeigevorrichtung,

Fig. 9 eine fünfte Ausführungsform der Anzeigevorrichtung,

Fig. 10 eine sechste Ausführungsform der Anzeigevorrichtung,

Fig. 11 eine siebte Ausführungsform der Anzeigevorrichtung,

Fig. 12 eine achte Ausführungsform der Anzeigevorrichtung,

Fig. 13 eine neunte Ausführungsform der Anzeigevorrichtung.

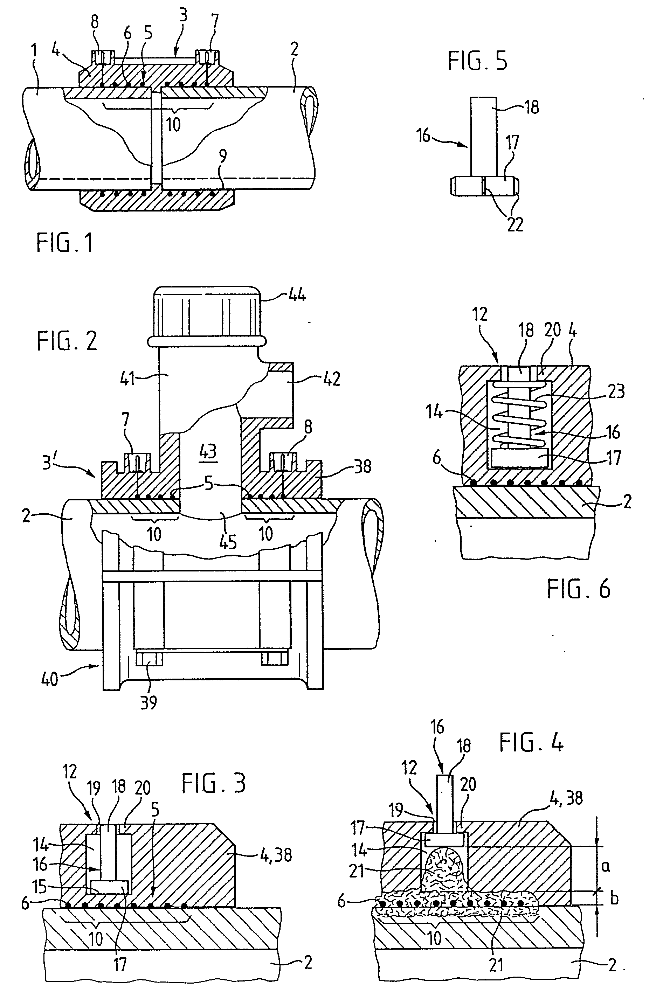

Für die in Fig. 1 dargestellte Verbindung der Enden zweier Rohrleitungen 1, 2 aus einem Thermoplast wird eine Elektroschweissmuffe 3 aus einem Thermoplast verwendet, die aus einem Muffenkörper 4 und einem im Muffenkörper 4 eingebetteten Heizelement 5, z.B. einem Widerstandsdraht aus im Abstand angeordneten Windungen, und zwei Anschlussstellen 7, 8 zusammengesetzt ist. Das Heizelement 5 ist hierbei in der Nähe der Innenwandung 9 des Muffenkörpers 4 angeordnet und bildet in seiner Ausdehnung den Schweissbereich 10 zwischen den Enden der Rohrleitungen 1, 2 und der Innenwandung des Muffenkörpers 4. Das Heizelement 5 wird über die Anschlussstellen 7, 8 an eine Stromquelle (nicht dargestellt) angeschlossen, die in der Regel die Zufuhr der Heizenergie derart steuert, dass die im Schweissbereich 10 entstehende Wärme eine einwandfreie Verschweissung zwischen dem Muffenkörper 4 und den Enden der Rohrleitungen 1, 2 gewährleistet. Damit auch der für eine gute Schweissung erforderliche Schweissdruck erreicht wird, wird dem Muffenkörper 4 eine Schrumpfreserve erteilt, durch die er sich beim Plastifizieren des Schweissbereiches 10 zusammenzieht und auf die Enden der Rohrleitungen 1, 2 aufschrumpft.

In Fig. 1 ist das Verbindungselement 3 eine Elektro-Schweissmuffe. An deren Stelle könnte jedoch auch eine anders ausgebildete Schweissmuffe Verwendung finden, durch die, z.B. durch Induktionswärme oder eine chemische Reaktion, die notwendige Wärmemenge in den Schweissbereich 10 gebracht werden kann.

In Fig. 2 ist das Verbindungselement 3' eine die Rohrleitung 2 umfassende Anschluss- oder Anbohrschelle, die einen Sattelteil 38 und einen, mit diesem durch Schraubenbolzen 39 verbundenen Gegensattelteil 40 aufweist. Der Sattelteil 38 weist einen Anschlusteil 41 mit einer in einem Rohrstutzen 42 endenden Leitung 43 auf. Der Anschlusteil 41 ist durch eine Verschlusskappe 44 verschlossen, die nach dem Verschweissen des Sattelteils 38 mit der Rohrleitung 2 zum Anbohren der Rohrleitung 2 entfernbar ist. Das Heizelement 5 ist ein Widerstandsheizdraht, der mit um die Mündung 45 der Leitung 43 verlaufenden Windungen den Schweissbereich 10 bildet und über die Anschlussstellen 7, 8 an die Stromquelle angeschlossen ist.

Als Verbindungselement 3 kann jedoch auch eine beliebige Konstruktion Verwendung finden, bei der jedoch immer in dem Schweissbereich 10 durch geeignete Mittel Wärme und Druck für die Verschweissung erzeugt werden, die überwacht werden sollen.

In Fig. 1 und 2 ist aus zeichnerischen Gründen keine Anzeigevorrichtung dargestellt, sondern in den vergrössert dargestellten Teilausschnitten in den Fig. 3–13.

Der in Fig. 3 und 4 dargestellte Ausschnitt umfasst einen Teil der Rohrleitung 2 und einen Teil des Muffenkörpers 4 einer Elektroschweissmuffe bzw. des Sattelteils 38 der Anschluss- oder Anbohrschelle mit einem teilweise dargestellten, aus einem Widerstandsheizdraht gebildeten Heizelement 5 und einer am Schweissbereich 10 angeordneten Anzeigevorrichtung 12, 14. Die Anzeigevorrichtung 12, 14 besteht aus einem zylindrischen Hohlraum 14, dessen Grund 15 an dem Schweissbereich 10 anliegt. Im Hohlraum 14 ist ein Anzeigemittel 12 verschiebbar gelagert, das aus einem Kolben 17 und einem Anzeigestift 18 besteht. Vor dem Schweissvorgang, der durch Wärmeerzeugung in dem Heizelement 5 eingeleitet wird, befindet sich der Kolben 17 in seiner Ausgangslage am Grund 15 des Hohlraumes 14, während der Anzeigestift 18 in einen Durchgang 19 einer den Hohlraum 14 abdeckenden Decke 20 ragt, jedoch nicht über den Aussenumfang des Muffenkörpers 4 ragt.

Wird nun der Schweissvorgang durch Wärmeerzeugung in dem Heizelement 5 eingeleitet, erweicht sich die Verbindungszone 10, wie dies in Fig. 4 angedeutet ist, wobei bei aureichender Temperatur der Grund 15 des Hohlraums 14 soweit plastifiziert wird, dass der im Schweissbereich 10 entstehende Schweissdruck ausreichend gross ist, um plastische Masse in den Hohlraum 14 zu drücken und hierbei den Anzeigestift 16 in die in Fig. 4 dargestellte Lage zu bewegen. Die Decke 20 bildet hierbei einen Anschlag, über den hinaus der Kolben 17 nicht bewegt werden kann. Der aus dem Durchgang 19 ragende Anzeigestift 18 bildet eine gut sichtbare und fühlbare Anzeige. Die Endlage des Anzeigeelementes 16 ist durch die Decke 20 begrenzt, so dass zur Erreichung derselben nur soviel plastische Masse 21 erforderlich ist, als dem Volumen des Hohlraums 14 entspricht. Der Anzeigestift 18 weist somit einen genau definierten Hub a auf. Mit dieser Anordnung wird eine eindeutige GUT/ SCHLECHT-Anzeige erreicht: Ist der Anzeigestift 18 um den Hub a ausgefahren, bedeutet dies, dass die Schweissbedingungen, d.h. Schweisstemperatur und Schweissdruck, richtig waren. Die Abstimmung der Bewegung des Kolbens 17 in Funktion des Schweissdruckes erfolgt durch die Wahl der Materialstärke b im Grund 15 des Hohlraumes 14. Der Anzeigestift 18 kann durch Verwendung einer zum Muffenkörper 4 bzw. Satteilteil 38 kontrastierenden Farbe optisch auffälliger gestaltet werden.

Damit der Kolben 17 nicht schon vor dem Schweissen in die Endlage rutscht, können reibungsvergrössernde Mittel zwischen dem Kolben 17 und der Innenwand des Hohlraumes 14 vorgesehen werden. In Fig. 5 sind dies am Aussenumfang des Kolbens 17 angeformte Lamellen 22. Der Reibschluss kann auch durch eine entsprechende Passung zwischen dem Anzeigestift 18 und dem Durchgang 19 oder durch Lamellen an der Wand des Durchgangs 19 erreicht werden.

Bei der Ausführungsform der Anzeigevorrichtung 12 nach Fig. 6 verhindert eine Druckfeder 23 das ungewollte Verschieben des Anzeigeelementes 16.

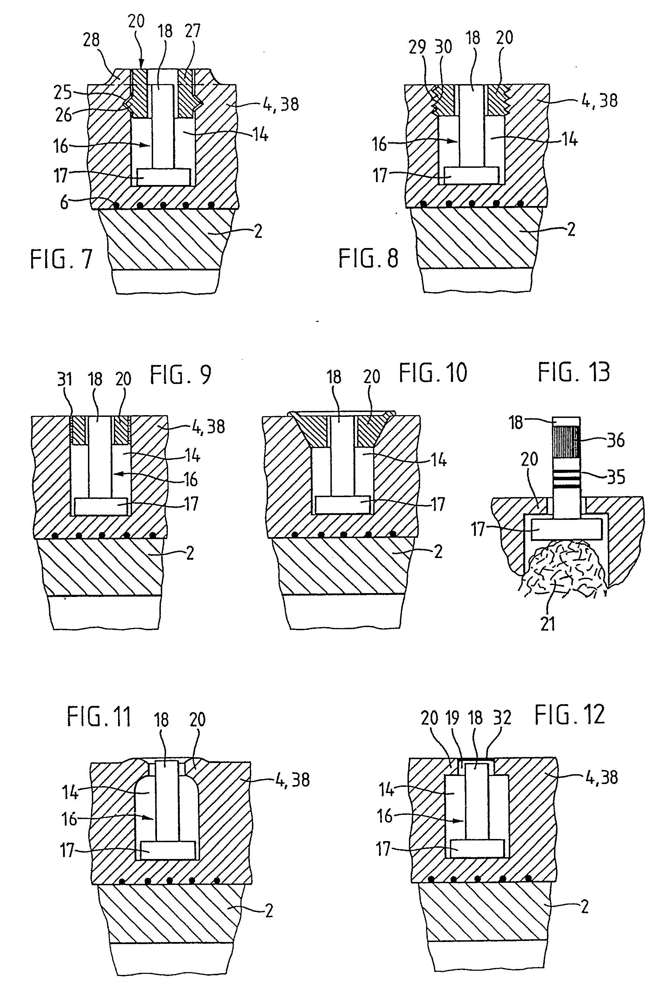

In Fig. 7–11 sind verschiedene Ausführungsformen der Anzeigevorrichtung 12 dargestellt, bei denen die Decke 20 in unterschiedlicher Weise ausgebildet ist. In Fig. 7 wird im Muffenkörper 4 bzw. Satteilteil 38 eine Nut 25 ausgespart, in die ein mit einem Vorsprung 26 versehener Anschlagring 27 einrastet. Falls die Dicke des Muffenkörpers 4 bzw. Satteilteil 38 nicht ausreicht, kann an seinem Aussenumfang ein Verstärkungsbund 28 vorgesehen werden, der natürlich auch für andere Deckelausführungen anwendbar ist.

In Fig. 8 ist die Decke ein Deckel 20 mit einem Aussengewinde 29, das in ein im Muffenkörper 4 bzw. Satteilteil 38 als Fortsetzung des Hohlraumes 14 angeordnetes Innengewinde 30 eingeschraubt wird.

In Fig. 9 ist der Deckel 20 durch eine Klebverbindung 31 am freien Rand des Hohlraumes 14 befestigt, während in Fig. 10 der Deckel 20 durch eine Pressverbindung am freien Rand des Hohlraums 14 befestigt ist.

In Fig. 11 bildet die Decke 20 einen integralen Teil des Muffenkörpers 4 bzw. des Satteilteils und wird durch eine thermische Verformung am freien Rand des Hohlraumes 14 erreicht. Dabei kann die Wärme in der zu verformenden Zone durch ein Heizelement, durch Ultraschall oder durch ein Hochfrequenzfeld aufgebracht werden. Je nach Werkstoff des Muffenkörpers 4 bzw. des Satteilteils 38 ist auch eine Kaltverformung anwendbar.

Bei der Ausführungsform der Anzeigevorrichtung nach Fig. 12 ist der Durchgang 19 durch eine Folie 32 verschlossen. Der Kolben 17 kann dadurch keine ungewollte Bewegung in die Endlage ausführen, sondern kann erst nach Durchstossen der Folie 32 durch den Anzeigestift 18 in seine Endlage bewegt werden. Die Folie 32 kann aus demselben Werkstoff wie der Muffenkörper 4 bzw. Satteilteil 38 bestehen, oder er kann als Teil des Deckels 20 ausgebildet sein, wie dieser als vom Muffenkörper 4 getrennt hergestellter Teil in Fig. 7–10 dargestellt ist.

Bei der Ausführungsform nach Fig. 13 ist der Anzeigestift 18 in besonderer Weise ausgebildet. Er kann hierbei mit einer Markierung in Form eines oder mehrerer Striche 35 oder durch eine farbliche Abstufung 36 versehen sein. Der Anzeigestift 18 könnte auch eine farbwechselnde Ausrüstung erhalten. Schliesslich könnte der Anzeigestift 18 als Messwertgeber für eine Fernanzeige oder zur Schaltung eines Gerätes, zum Beispiel der Stromquelle für die Schweissung, verwendet werden.

Die beschriebene Anzeigevorrichtung 12 wurde in Verbindung mit einer Elektro-Schweissmuffe beschrieben. Sie kann aber, wie bereits erwähnt wurde, für alle durch eingebaute Heizelemente verschweissbare thermoplastische Gegenstände angewendet werden.

Die Anordnung des Hohlraumes 14 muss keineswegs mit quer zum Schweissbereich 10 verlaufender Achse angeordnet sein. Die Anzeigevorrichtung könnte auch mit parallel oder schräg zum Verbindungsbereich 10 verlaufender Achse angeordnet sein, z.B. an den Stirnseiten einer Elektro-Schweissmuffe. Der Hohlraum 14 kann auch einen anderen Querschnitt als den Kreisquerschnitt aufweisen. Auch in diesem Fall weist die Anzeigevorrichtung einen definierten Hub des Kolbens 17 auf, das getrennt vom Muffenkörper 4 bzw. Satteilteil 38 im Hohlraum 14 verschiebbar angeordnet ist.

**Patentansprüche**

1. Schweissbares Verbindungselement (3, 3') zum Verbinden oder Anschliessen thermoplastischer Leitungselemente (1, 2), welches einen thermoplastischen Körper (4) aufweist, in welchem zur Erzeugung von Wärme ein Heizelement (5) zur Verschweissung des Körpers mit dem bzw. den in dem Schweissbereich (10) liegenden Leitungselement bzw. Leitungselementen und eine Anzeigevorrichtung (12, 14) angeordnet sind, dadurch gekennzeichnet, dass in dem Körper (4) ein geschlossener zylinderförmiger Hohlraum (14) angeordnet ist, dessen Grund (15) in dem Schweissbereich (10) des Heizelementes (5) liegt und dessen Achse etwa radial verläuft, in welchem Hohlraum als Anzeigemittel (12) ein Kolben (17) mit einem Anzeigestift (18) aus einer schweissbereichnahen Ausgangslage am Grund des Hohlraumes beim Schweissen in eine schweissbereichferne Endlage an einer den Hohlraum abschliessenden Decke (20) bewegbar ist, wobei der Anzeigestift (18) in der Endlage aus einem Durchgang (19) durch die Decke (20) herausragt.

2. Verbindungselement nach Anspruch 1, dadurch gekennzeichnet, dass der Kolben (17) mit einer Feder (23) versehen ist, deren Federkraft eine den Kolben gegen die Ausgangslage drückende Kraft ist.

3. Verbindungselement nach Anspruch 1, dadurch gekennzeichnet, dass der Kolben (17) auf der Umfangsfläche angeordnete, reibungserzeugende Lamellen (22) aufweist.

4. Verbindungselement nach Anspruch 1, dadurch gekennzeichnet, dass zwischen dem Anzeigestift (18) und dem Durchgang (19) ein Reibschluss besteht.

5. Verbindungselement nach einem der Ansprüche 1 bis 4, dadurch gekennzeichnet, dass die den Hohlraum (14) abschliessende Decke als ein vom Körper (4) getrennter Deckel (20) ausgebildet und mit dem Körper lösbar oder nichtlösbar verbunden ist.

6. Verbindungselement nach Anspruch 5, dadurch gekennzeichnet, dass der Deckel (20) durch eine Schweiss- oder Klebverbindung (31) oder eine Einpressverbindung mit dem Körper (4) verbunden ist.

7. Verbindungselement nach Anspruch 5, dadurch gekennzeichnet, dass der Deckel (20) durch eine Schraubverbindung (29, 30) mit dem Körper (4) verbunden ist.

8. Verbindungselement nach Anspruch 1, dadurch gekennzeichnet, dass die Decke als ein aus dem Material des Körpers (4) geformter Abschluss (20) ausgebildet ist.

9. Verbindungselement nach einem der Ansprüche 1, 5 bis 8, dadurch gekennzeichnet, dass der Anzeigestift (18) in der Ausgangslage des Kolbens (17) durch eine den Durchgang (19) des Deckels (20) abschliessende Folie (32) abgedeckt ist, die beim Auftreten des Druckes im Schweissbereich (10) vom Anzeigestift (18) durchstossen zu werden bestimmt ist.

10. Verbindungselement nach einem der Ansprüche 1 bis 9, dadurch gekennzeichnet, dass das Anzeigemittel (18) eine von der Farbe des Körpers (4) unterschiedliche Farbe aufweist.

## Claims

1. Weldable connection element (3, 3') for joining or connecting thermoplastic pipes (1, 2) which has a thermo plastic body (4) in which for generating heat a heating element (5) for welding the body with the pipe or pipes lying in the welding region (10) and an indicator device (12, 14) are arranged, characterised in that in the body (4) there is arranged a closed cylindrical hollow space (14) the base of which (15) lies in the weld region (10) of the heating element (5) and the axis of which runs essentially radially, in which hollow space a piston (17) with an indicator pin (18) is moveable as an indicator means (12) from a starting position near the welding region on the base of the hollow space on welding into an end position remove from the welding region against a cover (20) closing the hollow space, wherein the indicator pin (18) in the end position projects outwardly from a passage (19) through the cover (20).

2. Connection element according to claim 1 characterised in that the piston (17) is provided with a spring (23) the spring force of which is a force pressing the piston towards the starting position.

3. Connection element according to claim 1 characterised in that the piston (17) has friction generating plates (22) arranged on the peripheral surfaces.

4. Connection element according to claim 1 characterised in that between the indicator pin (18) and the passage (19) there is a friction closure.

5. Connection element according to one of claims 1 to 4 characterised in that the cover closing the hollow space (14) is constructed as a lid (20) separate from the body (4) and is connected removably or non-removably with the body.

6. Connection element according to claim 5 characterised in that lid (20) is connected by a weld or adhesive connection (31) or a press-in connection with the body (4).

7. Connection element according to claim 5 characterised in that the lid (29) is connected by a screw connection (29, 30) with the body (4).

8. Connection element according to claim 1 characterised in that the cover is formed as a closure (20) formed of the material of the body (4).

9. Connection element according to one of claims 1, 5 to 8, characterised in that the indicator pin (18) is covered in the starting position of the piston (17) by a foil (32) closing a passage (19) of the lid (20) which on the arising of the pressure in the welding region (10) is destined to be pushed through by the indicator pin (18).

10. Connection element according to one of claims 1 to 9 characterised in that the indicator means (18) has a colour differing from the colour of the body (4).

## Revendications

1. Elément d'assemblage soudable (3, 3') pour jonction ou raccordement de tubes thermoplastiques (1, 2) qui comporte un corps thermoplastique (4) dans lequel sont montés, pour la production de chaleur, un élément chauffant (5) pour le soudage du corps avec le ou les tubes qui se trouvent dans la zone de soudage (10) et un dispositif indicateur (12, 14), caractérisé en ce que le corps (4) comprend une cavité cylindrique fermée (14) dont le fond (15) se trouve dans la zone de soudage (10) de l'élément chauffant (5) et dont l'axe est orienté sensiblement dans le sens radial, cette cavité contenant, comme moyen indicateur (12), un piston (17) qui comporte une cheville indicatrice (18) et qui peut se déplacer, au cours du soudage, depuis une position de départ voisine de la zone de soudage, au niveau du fond de la cavité, jusqu'à une position finale éloignée de la zone de soudage, au niveau d'un couvercle (20) qui ferme la cavité, la cheville indicatrice (18) faisant saillie dans la position finale à travers le couvercle (20) en passant par une ouverture (19).

2. Elément d'assemblage selon la revendication 1, caractérisé en ce que le piston (17) est muni d'un ressort (23) dont la force élastique le pousse dans la direction de la position de départ.

3. Elément d'assemblage selon la revendication 1, caractérisé en ce que le piston (17) comporte, sur une surface périphérique, des lamelles (22) qui produisent un frottement.

4. Elément d'assemblage selon la revendication 1, caractérisé en ce que la cheville indicatrice (18) et l'ouverture (19) réalisent une fermeture par frottement.

5. Elément d'assemblage selon l'une des revendications 1 à 4, caractérisé en ce que le couvercle qui ferme la cavité (14) est un couvercle (20) séparé du corps (4) et est relié à ce corps de manière à être amovible ou non.

6. Elément d'assemblage selon la revendication 5, caractérisé en ce que le couvercle (20) est relié au corps (4) par soudage, par collage (31) ou par enfoncement.

7. Elément d'assemblage selon la revendication 5, caractérisé en ce que le couvercle (20) est relié au corps (4) par des vis (29, 30).

8. Elément d'assemblage selon la revendication 1, caractérisé en ce que le couvercle est une pièce moulée (20) constituée en même matière que le corps (4).

9. Elément d'assemblage selon l'une des revendications 1 ou 5 à 8, caractérisé en ce que, dans la position de départ du piston (17), la cheville indicatrice (18) est recouverte par une feuille mince (32) qui ferme l'ouverture de passage (19) ménagée dans le couvercle (20) et qui est destinée à être percée par la cheville indicatrice (18) au moment où la zone de soudage (10) est soumise à la pression.

10. Elément d'assemblage selon l'une des revendications 1 à 9, caractérisé en ce que le moyen indicateur (18) est une couleur différente de la couleur du corps (4).

EP 0 173 174 B1

FIG. 1

FIG. 2

FIG. 3

FIG. 4

FIG. 5

FIG. 6

7

FIG. 7

FIG. 8

FIG. 9

FIG. 10

FIG. 13

FIG. 11

FIG. 12